(19) **Europäisches Patentamt**

**European Patent Office**

**Office européen des brevets**

(11) **EP 1 074 900 B1**

(12) **EUROPÄISCHE PATENTSCHRIFT**

(45) Veröffentlichungstag und Bekanntmachung des Hinweises auf die Patenterteilung:
**11.10.2006 Patentblatt 2006/41**

(51) Int Cl.:
*G05B 13/04* *(2006.01)*

(21) Anmeldenummer: **99115219.0**

(22) Anmeldetag: **02.08.1999**

(54) **Prädikative Einrichtung zum Regeln oder Steuern von Versorgungsgrössen**

Predictive device for controlling or regulating supply variables

Dispositif prédictif pour la commande ou la régulation des variables d alimentation

(84) Benannte Vertragsstaaten:
**AT CH DE FR GB IT LI NL SE**

(43) Veröffentlichungstag der Anmeldung:
**07.02.2001 Patentblatt 2001/06**

(73) Patentinhaber: **Siemens Schweiz AG**
**8047 Zürich (CH)**

(72) Erfinder:
• **Gruber, Peter**
**8909 Zwillikon (CH)**
• **Tödtli, Jürg**
**8049 Zürich (CH)**

(74) Vertreter: **Weise, Wolfgang**
**Siemens Schweiz AG**
**Intellectual Property Department Zug**
**Gubelstrasse 22**
**6300 Zug (CH)**

(56) Entgegenhaltungen:
EP-A- 0 462 815　　　　EP-A- 0 584 852
EP-A- 0 915 301　　　　WO-A-94/27202
US-A- 5 115 967

• M.PACHTER: "CONTROL RECONFIGURATION WITH ACTUATOR RATE SATURATION" PROCEEDINGS OF THE 1995 AMERICAN CONTROL CONFERENCE, Bd. 5, 21. Juni 1995 (1995-06-21), Seiten 3495-3499, XP000861571 USA

**Beschreibung**

Technisches Gebiet

Die Erfindung bezieht sich auf eine prädiktive Einrichtung zum Regeln oder Steuern von Versorgungsgrössen.
Als Versorgungsgrössen gelten hier insbesondere Raumklimagrössen aber auch Prozessgrössen eines Energieerzeugers oder Energieverteilungssystems.
Solche Einrichtungen eignen sich beispielsweise zum Heizen/Kühlen von Gebäuden, wobei durch die Einrichtung Heizenergie oder Kühlenergie eingespart werden kann. Im weiteren eignen sich derartige Lunrichtungen auch zum Betreiben eines Energiespeichersystems wie beispielsweise eines Kältespeichers.

Stand der Technik

Aus EP 462 815 ist eine Einrichtung dieser Art bekannt, bei der ein Tuner zur Festlegung eines variablen Zeithorizonts und einer Abtastrate benutzt wird.
In WO 94/27202 wird zur Kostenminimicrung vorgeschlagen, eine Elektroheizung aufgrund empfangener Tarif- und Wettervorhersageinfomation zu schalten.
Aus US 5,115,967 ist eine Einrichtung zur Optimierung des Energieverbrauchs einer Raumklimaanlage bekannt. Die Optimierung wird anhand eines nicht-linearen Wirkungsgrad-Modells unter Einbeziehung eines von Benutzern vorgegebenen Belegungsplans vorgenommen.
Es ist auch bekannt (Mario El-Khoury et al: NEUROBAT, Predictive Neuro-fuzzy Building Control System, Mai 1998), in einem prädiktiven Regler ein Gebäude bzw. ein Raum mit einem neuronalen Netz zu modellieren.
Mit bekannten prädiktiven Regeleinrichtungen ist der Nachteil verbunden, dass im allgemeinen mit angemessenem Rechenaufwand nur relativ kurze Zeithorizonte, beispielsweise 6 Stunden, berechenbar sind, was hier als ungenügend betrachtet wird.

Aufgabenstellung

Der Erfindung liegt die Aufgabe zugrunde, eine prädiktive Einrichtung vorzuschlagen, mit denen notwendige Grössen über einen wesentlich längeren Zeithorizont - also ein oder mehrere Tage - mit kostengünstigen Mitteln zuverlässig berechnet werden können.

Weitere Vorteile der Erfindung

Falls die Versorgungsgrössen Raumklimagrössen sind, wird ein Raum- oder Gebäudemodell benutzt. Durch den Einsatz eines einzigen Raum- oder Gebäudemodells ergibt sich grundsätzlich eine einfachere Struktur der Regel- und Steuereinrichtung, weil durch das besagte Modell sowohl die auf einer Heizkurve basierende Regelmethode als auch die als OSSC bekannte Methode der optimalen Start- und Stopzeitpunktregelung und zudem die Schalter für Heizgrenzen ersetzbar sind.
Im weiteren wird eine Energieeinsparung durch Minimierung einer Kostenfunktion erreichbar, wobei die Kostenfunktion mit Vorteil Komfort- und Energieterme aufweist.

Darstellung der Erfindung

Die genannte Aufgabe wird erfindungsgemäss durch die Merkmale des Anspruchs 1 gelöst. Vorteilhafte Ausgestaltungen ergeben sich aus den abhängigen Ansprüchen.
Nachfolgend werden Ausführungsbeispiele der Erfindung anhand der Zeichnung näher erläutert. Die beschriebenen Beispiele beziehen sich auf die Steuerung beziehungsweise Regelung von Raumklimagrössen. Es versteht sich von selbst, dass die Beispiele jedoch mit wenig Aufwand auf Einrichtungen zur Steuerung oder Regelung anderer Versorgungsgrössen übertragbar sind. Im allgemeinen Fall, also beim Regeln oder Steuern von Versorgungsgrössen, wird bei einer Einrichtung gemäss der Erfindung anstelle eines Raum- oder Gebäudemodells ein Verbrauchermodell benutzt.
Es zeigen:

Fig. 1   die prinzipiellen Struktur einer allgemeinen prädiktiven Einrichtung zum Regeln und Steuern von Raumklimagrössen,

Fig. 2   wesentliche Funktionsblöcke der prädiktiven Einrichtung,

Fig. 3   eine Auswahl von Gebäudetypen, in denen die prädiktive Einrichtung anwendbar ist,

Fig. 4     eine Struktur des Zeithorizonts der prädiktiven Einrichtung,

Fig. 5     beispielhafte Diagramme zu Optimierungsfunktionen der prädiktiven Einrichtung,

Fig. 6     ein in der prädiktiven Einrichtung benutzbares Raummodell,

Fig. 7     ein Detail der Struktur des Zeithorizonts der prädiktiven Einrichtung,

Fig. 8     Übertragungsgleichungen der prädiktiven Einrichtung, und

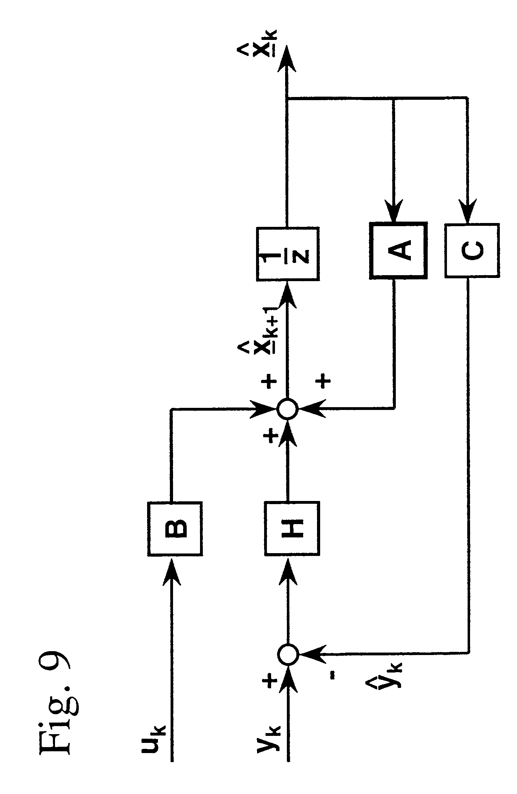

Fig. 9     die prinzipielle Struktur eines als Beobachter bezeichneten Funktionsblockes der prädiktiven Einrichtung.

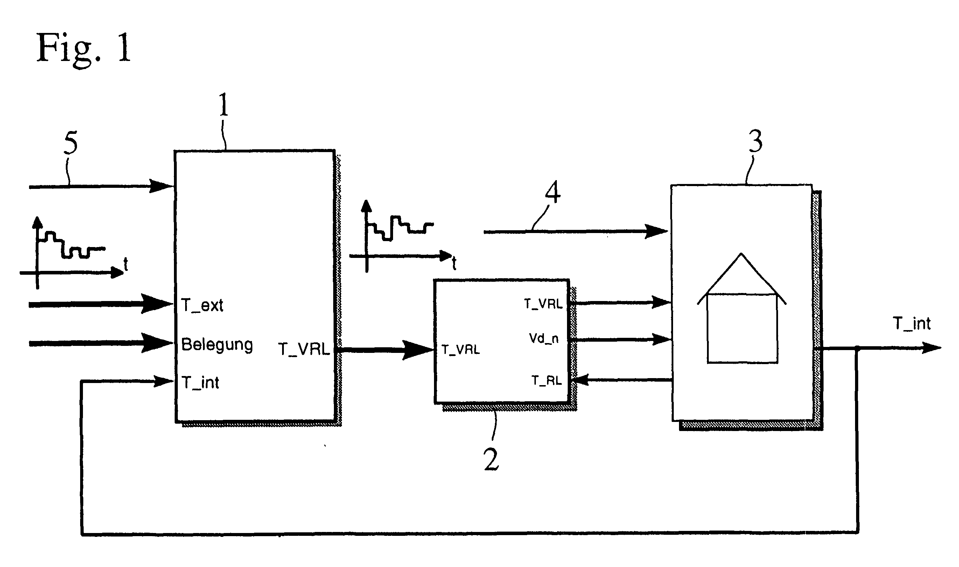

In der Fig. 1 ist eine Anordnung mit einer allgemeinen prädiktiven Einrichtung zum Regeln und Steuern von Raumklimagrössen in drei miteinander verbundene Funktionsblöcke aufgeteilt, wobei mit 1 ein prädiktiver Regler, mit 2 eine Vorlauftemperaturregelung und mit 3 ein Raum/Gebäude bezeichnet sind.

Raumklimagrössen beeinflussende Störeingänge 4 sind beispielhaft die Aussentemperatur, die Sonneneinstrahlung, der Wind und die Fremdwärme. Raumklimagrössen beeinflussende Steuereingänge sind hier die Vorlauftemperatur T_VRL mit einem dazugehörigem normierten Volumendurchfluss Vd_n, wovon für den Regler 1 im dargestellten Fall nur die gemessene Aussentemperatur T_ext und die vom Regler 1 selbst gesteuerte Vorlauftemperatur T_VRL zur Verfügung stehen.

Eingänge der Vorlauftemperaturregelung 2 sind der vom prädiktiven Regler 1 berechnete Vorlauftemperatur-Sollwert T_VRL sowie die Rücklauftemperatur T_RL

Die Aufgabe des prädiktiven Reglers 1 ist es nun, die Steuergrösse - hier die Vorlauftemperatur - über einen vorgegebenen Zeithorizont so zu steuern, dass die Innentemperatur T_int im Raum/Gebäude 3 den Spezifikationen des Benutzers genügt. Dazu benötigt der Regler 1 natürlich ein Raum-/Gebäudemodell, hier beispielhaft ein lineares Modell 2. Ordnung, und Vorhersageprofile von Wettergrössen - hier beispielhaft nur die Aussentemperatur T_ext - und die Belegung des Raumes oder des Gebäudes. Von der ausgegebenen Sequenz von Vorlauftemperaturen wird bei jedem Schritt nur der erste Wert T_VRL verwendet und an die Vorlauftemperaturregelung 2 weitergegeben, die zusätzlich die Funktion des Ein- und Ausschaltens einer Pumpe übernimmt.

In einer Variante der prädiktiven Einrichtung wird die geregelte bzw. gesteuerte Versorgungsgrösse - hier die Innentemperatur T_int - gemessen und dem prädiktiven Regler 1 zugeführt.

Der Benutzer kann über Benutzereinstellungen 5 auf das Verhalten des prädiktiven Reglers 1 zugreifen.

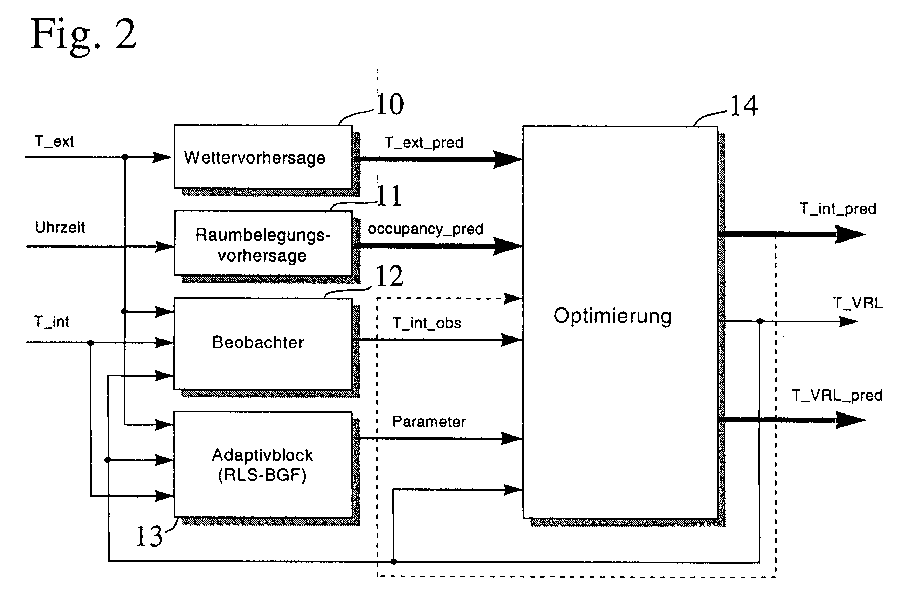

Der prädiktive Regler 1 kann in verschiedene, gut trennbare Funktionseinheiten aufgetrennt werden, die beispielhaft in der Fig. 2 dargestellt sind, in welcher mit 10 ein Wettervorhersage-Modul, mit 11 ein Raumbelegungsvorhersage-Modul, mit 12 ein Beobachter, mit 13 ein Adaptivblock und mit 14 ein Optimierungs-Modul bezeichnet sind.

Als Wettervorhersage wird hier nur die Aussentemperatur vorausgesagt, für mehrere vorauszusagende Grössen ist das Vorgehen jedoch analog. Der Ausgang des Wettervorhersage-Moduls 10 ist ein Profil T_ext_pred der Aussentemperatur der Länge des Zeithorizontes. Wichtig ist bei der Wettervorhersage, dass sie unabhängig von den restlichen Bestandteilen des Reglers 1 auf ihre Funktionstauglichkeit untersucht und somit abgesondert behandelt werden kann.

Über die momentane Uhrzeit wird die Raumbelegung vorausgerechnet, deren Anfangs- und Endzeiten für jeden Wochentag vom Benutzer eingegeben werden können.

Für den Fall einer Raumtemperaturmessung kommen zwei Funktionen dazu: Der Beobachter 12 und die Parameteradaption im Adaptivblock 13. Ohne Raumtemperaturmessung fallen diese weg und als Innentemperatur des nächsten Berechnungszyklus wird die vorausgesagte Innentemperatur T_int_pred verwendet, was in der Fig. 2 durch eine am Optimierungs-Modul 14 gestrichelt eingezeichnete Schleife dargestellt ist.

Der Beobachter 12 dient in diesem Fall der Filterung der Innentemperatur - und nicht der Schätzung einer unbekannten Grösse - um schnelle Änderungen des Signals abzuschwächen. Trotz des Einsatzes des Beobachters 12 als Filter wird die Phase der geschätzten Innentemperatur dank des im Beobachter verwendeten Raummodells 2. Ordnung im Vergleich zu klassischen Filtern nicht zu stark verschoben. Mit dem Adaptivblock 13 können die Parameter des Raummodells geschätzt und - nachdem sich die Paramterschätzungen stabilisiert haben - auch für die Optimierung verwendet werden.

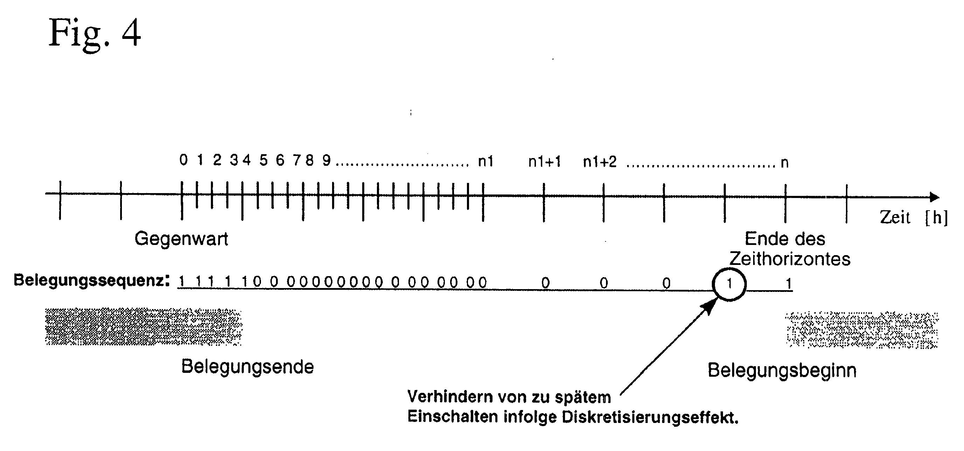

Alle Störgrössen, die auf den Raum 3 (Fig. 1) wirken, im beschriebenen Fall die Raumbelegung und die Aussentemperatur, müssen zu jedem Zeitpunkt der Optimierung über den Zeithorizont als Profile vorausberechnet werden. Dazu wird der Horizont in n Abtastschritte unterteilt. Wie in Fig 4 ersichtlich ist, kann der Horizont dabei in n1 kurze und n-n1-1 lange Abtastschritte unterteilt werden. Die Abtastzeit des Reglers und damit auch die Zeit, nach der die Optimierung wiederholt wird, ist T_sim. Die Abtastzeit der kurzen Schritte am Anfang des Zeithorizontes sind hier beispielhaft gleich T_sim gewählt und die Abtastzeit Ts der langen Schritte als Ts=4*T_sim.

Das Wettervorhersage-Modul 10 liefert für die n Zeitpunkte aufgrund eines Modells die vorausberechneten Werte. Das Raumbelegungsvorhersagemodul 11 liefert dementsprechend die vorausberechnete Raumbelegung in Form einer 0 (nicht belegt)-1(belegt)- Sequenz (Fig. 4). Dazu benötigt das Modul die aktuelle Zeit, das Wochenprofil und die Abtastzeiten T_sim und Ts.

Die Nummern oberhalb der Zeitachse in Fig. 4 sind diejenigen Werte, welche die Laufvariable i wärend eines Optimierungzyklusses annimmt. Für jeden benötigten Zeitpunkt wird ermittelt, ob der Raum belegt oder unbelegt ist. Ein mögliches Belegungsprofil ist im untersten Teil der Fig. 4 gegeben.

Da die Zeitschritte nach nl viermal grösser sind als die vorhergehenden, wird bei den Zeitpunkten grösser gleich nl vorteilhafterweise geprüft, ob der nächste Zeitpunkt in einer Belegungsperiode liegt. Wenn dies der Fall ist, wird die Belegungsvariable dieses Zeitpunktes ebenfalls auf 1 gesetzt. Dies wird getan, um ein rechtzeitiges Aufheizen am Morgen oder nach einem Wochenende zu gewährleisten. Bei der n-ten Zeit wird auf die n+1-te Zeit zugegriffen.

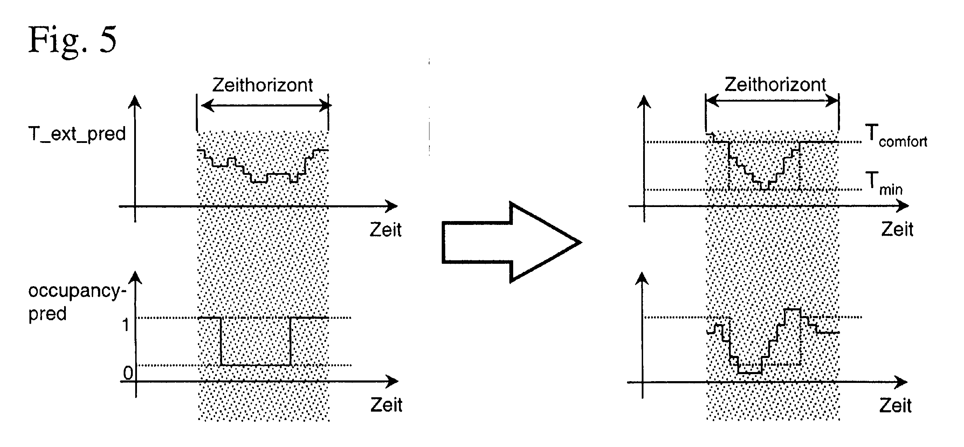

In der Fig. 5 zeigt ein erstes Diagramm das Profil T_ext_pred der vorausgesagten Aussentemperatur, ein zweites Diagramm das Profil occupancy-pred der vorausberechneten Raumbelegung, ein drittes Diagramm das Profil T_int_pred der vorausgesagten Innentemperatur und ein viertes Diagramm das Profil T_VRL_pred der vorausgesagten Vorlauftemperatur jeweils über den Zeithorizont.

Die Aufgabe des Optimierungs-Moduls 14 besteht darin, aus den vorausgesagten Aussentemperaturen T_ext_pred, der vorausberechneten Raumbelegung occupancy_pred, der gefilterten Innentemperatur T_int_obs, der gemessenen oder modellberechneten momentanen Innentemperatur T_int und des Raummodelles des Reglers inklusive dazugehörige Parameter die Innentemperaturverläufe T_int_pred und Vorlauftemperaturverläufe über den Zeithorizont vorauszusagen. Das zu berechnende Vorlauftemperaturprofil, vorteilhafterweise bestehend aus T_VRL und T_VRL_pred, muss so bestimmt werden, dass eine Kostenfunktion optimiert wird und gleichzeitig zusätzliche physikalische begründete Bedingungen eingehalten werden, damit ein Kompromiss zwischen Energie- und Kostenoptimalität erreicht wird. Die Bedingungen betreffen die vorausberechneten Vorlauf- und Innentemperaturen. Der erste Wert des ausgegebenen Profils T_VRL wird dann gestellt.

Die Optimierung wird mit Hilfe der linearen respektive der quadratischen Programmierung gelöst.

Die lineare Programmierung minimiert den linearen Ausdruck $\underline{f}^T\underline{x}$ unter den Bedingungen $A\underline{x} <= \underline{b}$, wobei die Bedingungen sowohl Gleichheitsbedingungen als auch Ungleichheitsbedingungen für die Vorlauftemperaturen, Vorlauftemperaturänderungen und Raumtemperaturen enthalten.

Die quadratische Optimierung minimiert den quadratischen Ausdruck $\frac{1}{2}x^THx + \underline{f}^T\underline{x}$.

Die Gleichheitsbedingungen bleiben dieselben wie für die lineare Programmierung, nämlich die n-malige Anwendung der Differenzengleichung, mit der die Innentemperatur vorausgerechnet wird. Die Ungleichheitsbedingungen können zum Teil ebenfalls übernommen werden.

Damit kann die Optimierung für einen Zyklus gestartet werden. Die berechneten Raum- und Vorlauftemperaturen setzen sich wie folgt zusammen: vorausgesagte Innentemperaturen für die n zukünftigen Zeitpunkte, optimal momentan zu stellende Vorlauftemperatur, optimal zu stellende Vorlauftemperaturen für die n-1 zukünftigen Zeitpunkte. Optimalität gilt selbstverständlich nur, falls das im Regler 1 benützte Raummodell mit der wirklichen Strecke übereinstimmt und für den Fall, dass die vorhergesagten Störgrössen eintreffen.

Als Ziel des prädiktiven Reglers 1 darf neben einer erhofften Heizenergieeinsparung auch die Vereinigung von drei bisher getrennt behandelten Funktionen der Gebäudebeheizung genannt werden: Der Regler soll die aussentemperaturgeführte Vorlauftemperaturregelung (Heizkurve), die optimale Start- und Stopzeitpunktregelung (OSSC) und den Heizgrenzenschalter als eine einzige Funktion ersetzten.

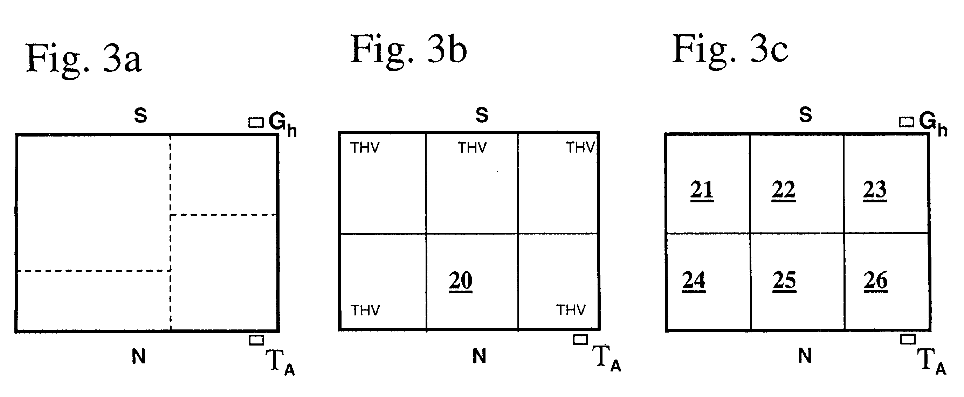

Da sich die Regelstrecken bzw. die Gebäudetypen stark unterscheiden, werden folgende drei Grundfälle - je mit und ohne Innentemperatursensor - einzeln betrachtet (Fig. 3):

Der erste Grundfall (Fig. 3a) bezieht sich auf ein als ein Raum betrachtetes Einfamilienhaus beispielhaft mit Bodenheizung mit und ohne Sonneneinstrahlungsberücksichtigung. Das Einfamilienhaus hat eine Südwand S und eine Nordwand N, welche zum Messen der Aussentemperatur $T_A$ einen Aussentemperaturfühler sowie einen Sensor für die Sonneneinstrahlung $G_h$ aufweist.

Der zweite Grundfall (Fig. 3b) bezieht sich auf mehrere Räume mit einem Referenzraum 20 ohne Sonneneinstrahlung. Ausser dem Referenzraum 20 sind die Räume durch Thermostatventile THV geregelt. Ein Aussentemperaturfühler für die Aussentemperatur $T_A$ ist an der Nordfassade N angeordnet.

Der dritte Grundfall (Fig. 3c) schliesslich bezieht sich auf ein Gebäude, welches zwei Heizkreise aufweist, wobei ein erster Heizkreis Räume 21, 22 und 23 der Südfassade S und ein zweiter Heizkreis Räume 24, 25 und 26 der Nordfassade N versorgt. Die Nordfassade weist einen Aussentemperaturfühler für die Aussentemperatur $T_A$ auf.

Raummodell

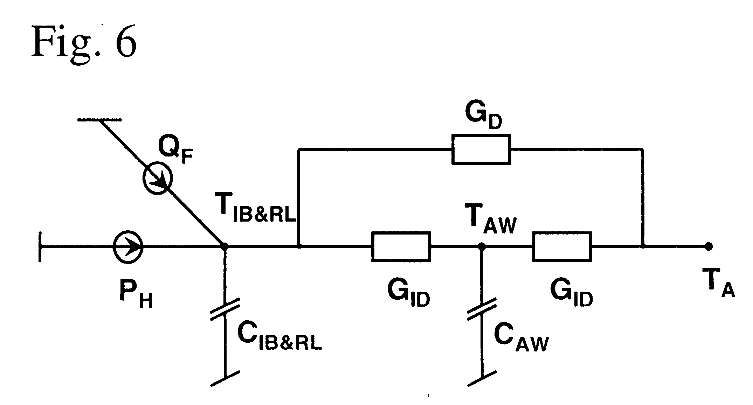

Der prädiktive Regler 1 mit dem Beobachter 12 sowie dem Adaptivblock 13 verwenden zur Optimierung mit Vorteil ein Raummodell 2. Ordnung. Die physikalische Vorstellung zum Raummodell ist in Fig.6 ersichtlich, wobei $T_{IB\&RL}$ die Temperatur der inneren Bauteile und der Raumluft, $T_{AW}$ die Temperatur der Aussenwand und $T_A$ die Aussentemperatur bedeuten.

Zwei Wärmespeicher mit zugehörigen Wärmekapazitäten $C_{IB\&RL}$ und $C_{AW}$ sind die inneren Bauteile inklusive Raumluft und die Aussenwand. Auf den erstgenannten Speicher wirken direkt die Heizleistung $P_H$ und die Fremdwärme $Q_F$. Über die beiden erweiterten Wärmeleitwerte $G_{ID}$ der Aussenwand kann ein indirekter Wärmetransfer über den Zwischenspeicher mit Kapazität $C_{AW}$, über den erweiterten Wärmeleitwert $G_D$ des Fensters kann ein direkter Wärmetransfer zwischen Innen und Aussen stattfinden. Mittels den beiden Energiebilanzen für die beiden Wärmespeicher (1. Hauptsatz der Thermodynamik) kann das Differentialgleichungssystem ermittelt werden. Mit einem Modell für den stationären Betrieb kann die Heizleistung $P_H$ mit der Vorlauftemperatur und der Raumtemperatur ausgedrückt werden.

$$P_H = (T\_VRL - T_{IB\&RL})kFf(v)$$

$$f(v) = v(1 - e^{-\frac{1}{v}}), \qquad v = \frac{mc}{kF}$$

Dabei ist F die Heizkörperoberfläche, k der Wärmedurchgangskoeffizient, m der Massenstrom und c die spezifische Wärmekapazität des Energieträgers und es gilt die Annahme, dass die Heizleistungsabgabe in den Raum linear in der Temperaturdifferenz der Vorlauftemperatur $T\_VRL$ minus der Temperatur der inneren Bauteile und der Raumluft $T_{IB\&RL}$ erfolgt. Somit ergibt sich ein kontinuierliches Zustandsraummodell

$$d\underline{x}/dt = A\underline{x} + B\underline{u}$$

$$y = C\underline{x}$$

mit den beiden Speichertemperaturen $T_{IB\&RL}$ und $T_{AW}$ als Zustände, $T_{IB\&RL}$ als Ausgang und den drei Eingängen Vorlauftemperatur $T_{VRL}$, Aussentemperatur $T_{AW}$ und Fremdwärme $Q_F$. Die Speichertemperatur $T_{IB\&RL}$ kann der Innentemperatur $T\_int$ entsprechen.

$$\begin{bmatrix} \dot{T}_{IB\&RL} \\ \dot{T}_{AW} \end{bmatrix} = \underbrace{\begin{bmatrix} -\dfrac{G_D + G_{ID} + kFf(v)}{C_{IB\&RL}} & \dfrac{G_{ID}}{C_{IB\&RL}} \\ \dfrac{G_{ID}}{C_{AW}} & -\dfrac{2G_{ID}}{C_{AW}} \end{bmatrix}}_{A} \begin{bmatrix} T_{IB\&RL} \\ T_{AW} \end{bmatrix} + \underbrace{\begin{bmatrix} \dfrac{kFf(v)}{C_{IB\&RL}} & \dfrac{G_D}{C_{IB\&RL}} & \dfrac{1}{C_{IB\&RL}} \\ 0 & \dfrac{G_{ID}}{C_{AW}} & 0 \end{bmatrix}}_{B} \begin{bmatrix} T_{VRL} \\ T_A \\ Q_F \end{bmatrix}$$

$$C = [1 \; 0]$$

Dieses kontinuierliche Zustandsraummodell wird dann unter Anwendung der inversen Laplacetransformation analytisch diskretisiert wodurch sich die folgende diskrete Darstellung ergibt:

$$\underline{x}_{k+1} = F\underline{x}_k + G\underline{u}_k$$

$$y_k = C\underline{x}_k$$

$$F = \begin{pmatrix} f_{11} & f_{12} \\ f_{21} & f_{22} \end{pmatrix} \qquad G = \begin{pmatrix} g_{11} & g_{12} & g_{13} \\ g_{21} & g_{22} & g_{23} \end{pmatrix}$$

Mit den Variablen u=u(1), w=u(2) und q=u(3) und der Aufteilung von G in G=[$\underline{G}_1\underline{G}_2\underline{G}_3$] ergibt sich:

$$\underline{x}_{k+1} = F\,\underline{x}_k + \underline{G}_1\,u_k + \underline{G}_2\,w_k + \underline{G}_3\,q_k$$

$$y_k = C\,\underline{x}_k$$

Mit einer Einheitsmatrix I erfolgt die Berechnung der z-Übertragungsfunktionenen mit der Formel:

$$[G_{T\_VRL}(z)\ G_{TA}(Z)\ G_{QF}(z)] = C(zI - F)^{-1}\,[\underline{G}_1\ \underline{G}_2\ \underline{G}_3]$$

Daraus kann eine Differenzengleichung für die Innentemperatur y=T_int=$T_{IB\&RL}$ hergeleitet werden:

$$y_{k+2} = (f_{11} + f_{22})y_{k+1} + (f_{12}f_{21} - f_{22}f_{11})y_k + g_{11}u_{k+1} + (f_{12}g_{21} - f_{22}g_{11})u_k$$
$$+ g_{12}w_{k+1} + (f_{12}g_{22} - f_{22}g_{12})w_k$$
$$+ g_{13}q_{k+1} + (f_{12}g_{23} - f_{22}g_{13})q_k$$

Mit der Annahme einer konstanten Fremdwärme q und den Abkürzungen

$$p_1 = (f_{11} + f_{22})$$

$$p_2 = (f_{12}f_{21} - f_{22}f_{11})$$

$$p_3 = g_{11}$$

$$p_4 = (f_{12}g_{21} - f_{22}g_{11})$$

$$p_5 = g_{12}$$

$$p_6 = (f_{12}g_{22} - f_{22}g_{12})$$

$$p_7 = g_{13}q + (f_{12}g_{23} - f_{22}g_{13})q$$

sowie der Verschiebung der Differenzengleichung um einen Zeitschritt erhält man aus obiger Differenzengleichung für die Innentemperatur:

$$y_{k+1} = p_1 y_k + p_2 y_{k-1} + p_3 u_k + p_4 u_{k-1} + p_5 w_k + p_6 w_{k-1} + p_7$$

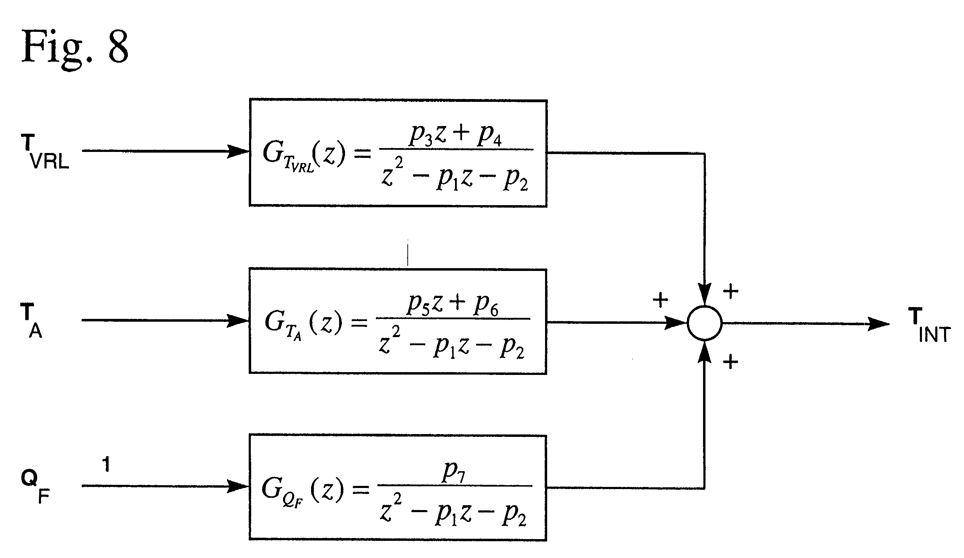

Ein Blockdiagramm mit den einzelnen Übertragungsfunktionen ist in Fig.8 dargestellt.

Die Parameter der Differenzengleichung können auf drei verschiedene Arten ermittelt werden. Im ersten Fall werden Parameter verwendet, die durch off-line Parameterestimation identifiziert wurden. Der zweite Weg erlaubt die Eingabe der physikalischen Werte des Raummodells zweiter Ordnung, das im Regler benutzt wird. Daraus wird das kontinuierliche Zustandsraummodell kreiert, danach diskretisiert und schliesslich werden die drei diskreten Übertragungsfunktionen (erster, zweiter und dritter Eingang zu Ausgang) bestimmt. Im dritten Fall können die Zeitkonstanten und Verstärkungsfaktoren aus dem Übertragungsverhalten einerseits von der Aussentemperatur auf die Innentemperatur und andererseits von der Vorlauftemperatur auf die Innentemperatur eingegeben werden (beispielsweise ermittelt durch Ausmessung von Sprungantworten des Raummodells). Alle drei Möglichkeiten ergeben die Systemparameter $p_i$ (i =1,2,...,7) des Reglermodells für die Samplingzeit T_sim

Sampling-Time Wechsel

Damit der Regler im zweiten Teil des Zeithorizontes (vgl. oben) mit der Schrittweite Ts weiterrechnen kann, werden im letzten Abschnitt der Funktion die Parameter mit der Samplingzeit Ts aus denjenigen der Samplingzeit T_sim bestimmt. Die resultierenden Parameter werden als weitere $p_i$ (i=1,2,...,7) abgelegt.

Im Zusammenhang mit der Fig. 4 wurde bereits erläutert, wie der Zeithorizont vorteilhaft diskretisiert wird, nämlich mit der Samplingtime T_sim für die ersten nl Schritte und mit Ts (= 4*T_sim) für die letzten n-nl Schritte. Für die ersten Schritte wird selbstverständlich die Differenzengleichung für die Abtastzeit T_sim verwendet und für die letzten Schritte die Differenzengleichung für die Abtastzeit Ts. Wie die Parameter der Differenzengleichung für die neue Abtastzeit Ts bei einem System 2. Ordnung mit reellen Polen erhalten werden können, soll hier gezeigt werden. Der n1+1-te Schritt ist ein Spezialfall. Wie diese Übergangsparameter bestimmt werden, wird auch beschrieben.

Für die Samplingtime-Umrechnung von T_sim nach Ts wird zunächst von der der Differenzengleichung entsprechenden kontinuierlichen Übertragungsfunktion 2. Ordnung ausgegangen, denn die Differenzengleichung kann gemäss Fig. 8 in Form von drei Übertragungsgleichungen mit gleichem Nenner angesehen werden.

Diese wird in Parialbrüche gemäss untenstehender Formel zerlegt, wobei a und b reelle Zahlen (reelle Pole) sind.

$$G(s) = \frac{b_1 s + b_0}{s^2 + a_1 s + a_0} = k_1 \frac{a}{s+a} + k_2 \frac{b}{s+b}$$

Die Übertragungsfunktion $G(s)\dfrac{1-e^{-sT}}{s}$ (der zweite Faktor ist das Halte-/Abtastglied, d.h. zero order hold) wird nun Z-transformiert (siehe Ackermann [5] S. 376).

$$G_1(z) = k_1 \frac{(1-e^{-aT})z}{(z-1)(z-e^{-aT})}(1-z^{-1}) + k_2 \frac{(1-e^{-bT})z}{(z-1)(z-e^{-bT})}(1-z^{-1}) = k_1 \frac{1-e^{-aT}}{z-e^{-aT}} + k_2 \frac{1-e^{-bT}}{z-e^{-bT}}$$

Die diskrete Übertragungsfunktion aus den Parametern $p_i$ (i=1,...,4) der Differenzengleichung kann leicht gebildet werden. Danach wird wieder partialbruchzerlegt.

$$G_2(z) = \frac{p_3 z + p_4}{z^2 - p_1 z - p_2} = \frac{p_3 z + p_4}{(z-z_1)(z-z_2)} = \frac{A}{z-z_1} + \frac{B}{z-z_2}$$

$$z_{1|2} = \frac{p_1 \pm \sqrt{p_1^{\,2} + 4p_2}}{2}$$

$$A = \frac{p_3 z_1 + p_4}{z_1 - z_2}$$

$$B = \frac{p_3 z_2 + p_4}{z_2 - z_1}$$

Für gleiche Samplingzeiten T gilt nun $G_1(z) = G_2(z)$. Für den schnelleren Takt mit der Samplingtime T_sim kennt man die Parameter, somit können a, b, $k_1$ und $k_2$ (diese sind unabhängig von der Samplingzeit, da kontinuierliche Parameter) bestimmt werden. Nun können die neuen Parameter aus derselben Gleichung für den langsameren Takt mit Samplingtime Ts bestimmt werden. Da gesamthaft 3 Übertragungsfunktionen für die drei Eingänge vorhanden sind, muss dieses Verfahren dreimal durchgeführt werden.

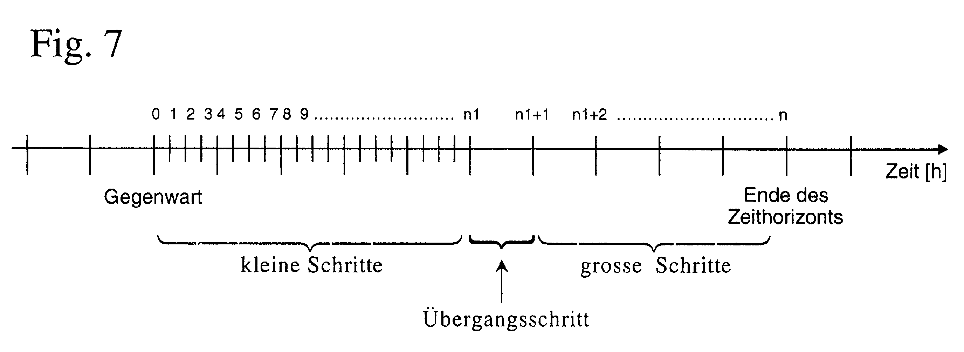

Die Parameter des in der Fig. 7 eingezeichneten Übergangsschrittes von kleiner zu viermal grösserer Abtastzeit können durch schrittweises Einsetzen von "alten" Differenzengleichungen in die Übergangsdifferenzengleichung erhalten werden, wie es untenstehend gezeigt ist. Als Zahlenbeispiel wird nach fünf Stunden auf grössere Schrittweiten gewechselt. Von den folgenden vier Gleichungen werden deshalb die ersten drei schrittweise in die letzte eingesetzt. Die Differenzengleichungen wurden hier für die Temperaturdifferenz zwischen Innentemperatur und gewünschter Komforttemperatur aufgeschrieben, wie sie später für die Optimierung eingesetzt werden.

$$y_{5.25} - T_{comfort} = p_1(y_5 - T_{comfort}) + p_2(y_{4.75} - T_{comfort}) + p_3 u_5 + p_4 u_{4.75} + p_5 w_5 + p_6 w_{4.75} + p_7$$
$$+ T_{comfort}(p_1 + p_2 - 1)$$

$$y_{5.5} - T_{comfort} = p_1(y_{5.25} - T_{comfort}) + p_2(y_5 - T_{comfort}) + p_3 u_{5.25} + p_4 u_5 + p_5 w_{5.25} + p_6 w_5 + p_7$$
$$+ T_{comfort}(p_1 + p_2 - 1)$$

$$y_{5.75} - T_{comfort} = p_1(y_{5.5} - T_{comfort}) + p_2(y_{5.25} - T_{comfort}) + p_3 u_{5.5} + p_4 u_{5.25} + p_5 w_{5.5} + p_6 w_{5.25} + p_7$$
$$+ T_{comfort}(p_1 + p_2 - 1)$$

$$y_6 - T_{comfort} = p_1(y_{5.75} - T_{comfort}) + p_2(y_{5.5} - T_{comfort}) + p_3 u_{5.75} + p_4 u_{5.5} + p_5 w_{5.75} + p_6 w_{5.5} + p_7$$
$$+ T_{comfort}(p_1 + p_2 - 1)$$

Damit kann $y_6$-$T_{comfort}$ mit ($y_5$-$T_{comfort}$), ($y_{4.75}$-$T_{comfort}$), $u_5$ und $u_{4.75}$ dargestellt werden. Dies erreicht man wie erwähnt durch schrittweises Einsetzen der Differenzengleichungen für ($y_{5.75}$-$T_{comfort}$), ($y_{5.5}$-$T_{comfort}$) und ($y_{5.25}$-$T_{comfort}$) in die Gleichung für ($y_6$-$T_{comfort}$). Als Resultat erhält man

$$y_6 - T_{comfort} = \left[p_1^4 + 3p_1^2 p_2 + p_2^2\right](y_5 - T_{comfort}) + \left[p_1^3 p_2 + 2p_1 p_2^2\right](y_{4.75} - T_{comfort})$$
$$+ \left[p_1^3 p_3 + 2p_1 p_2 p_3 + (p_3 + p_4)(p_1^2 + p_1 + p_2 + 1)\right]u_5 + \left[p_1^3 p_4 + 2p_1 p_2 p_4\right]u_{4.75}$$
$$+ \left[p_1^3 p_5 + 2p_1 p_2 p_5 + (p_5 + p_6)(p_1^2 + p_1 + p_2 + 1)\right]w_5 + \left[p_1^3 p_6 + 2p_1 p_2 p_6\right]w_{4.75}$$
$$+ \left[p_1^3 + p_1^2 + 2p_1 p_2 + p_1 + p_2 + 1\right]\left\{p_7 + T_{comfort}(p_1 + p_2 - 1)\right\}$$

Das resultierende Set von Gleichungen für das oben erwähnte Zahlenbeispiel ist nun folgendes: 20 Gleichungen für jede Viertelstunde für die Zeitpunkte 0.25h bis 5h mit den ursprünglichen Parametern (für den schnelleren Takt), eine Übergangsgleichung (siehe letzte Gleichung) für den Zeitpunkt 6h mit den aus den ursprünglichen Parametern abgeleiteten Übergangsparametern und Gleichungen für jede Stunde für die Zeitpunkte 7h bis Zeithorizontende mit den Parametern, die aus dem Samplingtimewechselverfahren erhalten wurden.

Identifikation

Die sieben Parameter der Differenzengleichung werden durch ein rekursives Least Squares Verfahren geschätzt. In Fig. 2 ist die Parameterschätzung als eigener RLS-Block auf der obersten Ebene abgetrennt. Eingangssignale des Adaptivblocks 13 sind alle gemessenen Ein- und Ausgänge des Prozesses, nämlich die Vorlauftemperatur T_VRL, die Aussentemperatur T_ext und die Innentemperatur T_int. Ausgegeben werden der geschätzte Parametervektor $\underline{\theta}$, der Vergissfaktor $\lambda$ und die Norm der Kovarianzmatrix P. Die Parameter werden von Anfang an geschätzt, deren Einsatz von Beginn weg ist allerdings nicht sinnvoll. Deshalb kann die genaue Zeit, nach der die geschätzten Parameter Verwendung finden sollen, über einen Switch eingegeben werden.
Dem Adaptivblock 13 wird der neue Zustand $\varphi_k = [y_{k-1}\ y_{k-2}\ u_{k-1}\ u_{k-2}\ w_{k-1}\ w_{k-2}\ 1]^T$ bereitgestellt, welcher nun die rekursive Parameterschätzung mit Vergissfakor durchführt (Algorithmus siehe Ljung [3] S. 307).

$$\underline{\theta}_k = \underline{\theta}_{k-1} + \frac{P_{k-1}\underline{\varphi}_k(y_k - \underline{\varphi}_k^T \underline{\theta}_{k-1})}{\lambda + \varphi_k^T P_{k-1}\varphi_k}$$

$$P_{k-1} = \frac{1}{\lambda}\left[P_{k-2} - \frac{P_{k-2}\underline{\varphi}_{k-1}\underline{\varphi}_{k-1}^T P_{k-2}}{\lambda + \underline{\varphi}_{k-1}^T P_{k-2}\underline{\varphi}_{k-1}}\right]$$

$$\lambda = \lambda_{min} + (1 - \lambda_{min})\frac{|P_{k-2}|}{p_{max}}$$

Es wird ein Bounded Gain Forgetting Verfahren angewandt, um die Unbegrenztheit der Matrix P zu verhindern, da die Matrix P eine unbegrenzte Verstärkung besitzen kann, falls die Bedingug der persistenten Anregung nicht erfüllt ist. Mit diesem Bounded Gain Forgetting Verfahren kann das Verhalten des Vergissfaktors $\lambda$ durch die beiden Einstellparameter $\lambda_{min}$ und $p_{max}$ gesteuert werden. Nimmt die Frobeniusnorm

$$\|A\|_{Frobenius} = \sqrt{\sum_{i,j} \left(a_{ij}^{\,2}\right)}$$

Beobachter

Ein Beobachter für die Innentemperatur ist natürlich wie auch die Parameterschätzung nur eine Option, falls dieselbe auch gemessen wird. Speziell an diesem Beobachter ist in diesem Fall sein Einsatz als Filter der bekannten Innentemperatur und nicht als Schätzung einer unbekannten Grösse. Das Modell des Beobachters entspricht auch nicht genau dem vorher hergeleiteten Raummodell, denn es werden die momentane und die um einen Zeitschritt frühere Innentemperatur als Zustände gewählt, die beide in der Optimierung Verwendung finden. Dieses neue Modell entsteht ohne Schwierigkeiten aus der Differenzengleichung wie im Folgenden gesehen werden kann:

Differenzengleichung:

$$y_{k+1} = p_1 y_k + p_2 y_{k-1} + p_3 u_k + p_4 u_{k-1} + p_5 w_k + p_6 w_{k-1} + p_7$$

Zustände des Beobachters:

$$\hat{\underline{x}}_k = \begin{bmatrix} y_k \\ y_{k-1} \end{bmatrix}$$

Beobachtersystemgleichungen:

$$\hat{\underline{x}}_{k+1} = \underbrace{\begin{bmatrix} p_1 & p_2 \\ 1 & 0 \end{bmatrix}}_{A} \hat{\underline{x}}_k + \underbrace{\begin{bmatrix} p_3 & p_4 & p_5 & p_6 & p_7 \\ 0 & 0 & 0 & 0 & 0 \end{bmatrix}}_{B} \begin{bmatrix} u_k \\ u_{k-1} \\ w_k \\ w_{k-1} \\ 1 \end{bmatrix}$$

$$\hat{y}_k = \underbrace{\begin{bmatrix} 1 & 0 \end{bmatrix}}_{C} \hat{\underline{x}}_k$$

Anhand der untenstehenden Skizze für den Beobachter kann die Beobachtergleichung erstellt werden. Mit der Beobachterreglermatrix H können dann die Pole des gesamten Beobachtersystems vorgegeben werden.

$$\hat{\underline{x}}_{k+1} = \left[A - HC\right]\hat{\underline{x}}_k + Bu_k + \underline{H}y_k$$

$$= \begin{bmatrix} p_1 - h_1 & p_2 \\ 1 - h_2 & 0 \end{bmatrix} \hat{\underline{x}}_k + \begin{bmatrix} p_3 & p_4 & p_5 & p_6 & p_7 \\ 0 & 0 & 0 & 0 & 0 \end{bmatrix} \begin{bmatrix} u_k \\ u_{k-1} \\ w_k \\ w_{k-1} \\ 1 \end{bmatrix} + \begin{bmatrix} h_1 \\ h_2 \end{bmatrix} y_k$$

Zwei Arten der Polvorgabe sind unten beschrieben: Als erste die Methode der Polvorgabe, die Bezug nimmt zum ursprünglichen System und als zweite Methode die Vorgabe der Zeitkonstanten.

Der Polverschiebungsfaktor x bestimmt, um wieviel die beiden (reellen) Pole der Differenzengleichung (Eigenwerte von A) in der komplexen Ebene im kontinuierlichen Fall nach links verschoben oder - im entsprechenden diskreten Fall - um wieviel die Pole der Differenzengleichung gegen den Ursprung verschoben werden. Um die Zeikonstanten des Systems mit der Dynamikmatrix *A-HC* gegenüber den Zeitkonstanten des Systems mit der Dynamikmatrix *A* x-mal zu verkleinern, müssen im diskreten Fall die Pole von *A-HC* gleich den mit x potenzierten Polen von *A* gewählt werden.

Eigenwerte von *A* sind:

$$\lambda_{1|2} = \frac{p_1 \pm \sqrt{p_1{}^2 + 4p_2}}{2}$$

Eigenwerte von *A-HC* sind: $\Lambda_{1|2} = \left(\lambda_{1|2}\right)^x$

Die Bestimmungsgleichung der Eigenwerte von *A-HC* ist: $\Lambda^2 + (h_1 - p_1)\Lambda - p_2(1-h_2) = 0$

Der Koeffizientenvergleich mit $\Lambda^2 - (\Lambda_1 + \Lambda_2)\Lambda + \Lambda_1\Lambda_2 = 0$ erlaubt nun die Bestimmung von $h_1$ und $h_2$ gemäss untenstehenden Formeln:

$$h_1 = p_1 - (\Lambda_1 + \Lambda_2)$$

$$h_2 = 1 + \frac{\Lambda_1\Lambda_2}{p_2}$$

Auch möglich ist die direkte Vorgabe der (kontinuierlichen) Zeitkonstanten $T_{kont}$ des Beobachtersystems. Die Pole des diskreten Systems werden somit zu

$$\Lambda_{1|2} = \exp\left(-\frac{1}{T_{kont}} T_{sim}\right).$$

T_sim stellt die Samplingzeit des diskreten Systems dar. Nun ergeben sich durch Koeffizientenvergleich mit der Polbestimmungsgleichung des Beobachtersystems analoge Formeln für $h_1$ und $h_2$ wie oben angeführt.

Vorlauftemperaturregelkreis mit möglicher Vorsteuerung

Die vom Optimierer 14 berechnete Vorlauftemperatur wird hier einem klassischen Vorlauftemperaturregelkreis als Sollwert zur Verfügung gestellt.

Falls die Leistungsabgabe der Heizung in den Raum nichtlinear in der Temperaturdifferenz ist, so wird angenommen, dass die statische nichtlineare Kennlinie der Heizung mit einem Parametervektor par parameterisiert ist.

$$P_H = f_H(T_{VRL}, T_{int}, \underline{par})$$

$$T_{int} = T_{IB\&RL}$$

durch eine vorgeschaltete inverse Kennlinie linearisiert werden kann, mit der der Vorlauftemperatursollwert so verändert wird, dass die nichtlineare Funktion kompensiert werden kann (Vorsteuerung). Dies erfolgt, indem man die Innentemperatur durch ihren Sollwert T_int_soll ersetzt, die Leistung P_H durch die vom Optimierer berechnete Leistung P_H_soll und obige Gleichung nach T_VRL auflöst und T_VRL durch T_VRL_soll ersetzt:

$$T_{VRL\_soll} = f_H^{-1}(P_{H\_soll}, T_{int\_soll}, \underline{par})$$

Berechnet der Optimierer die benötigte Leistung, dann kann diese direkt für P_H_soll eingesetzt werden. Im Falle, dass der Optimierer den Vorlauftemperatursollwert liefert, so muss zusätzlich P_H_soll berechnet werden. Die benötigten Parameterwerte par können aus Auslegungsdaten bestimmt werden.

Optimierung

Über den Zeithorizont wird die Steuervektorsequenz - also zukünftige Vorlauftemperaturen oder Leistungen - unter Berücksichtigung der Modellgleichungen und Beschränkungen optimiert. Die Optimierung wird hier nur mit der Vorlauftemperatur aufgeschrieben, kann aber auch mit der Leistung durchgeführt werden.

*Lösung mit linearer Programmierung (LP-Fall)*

Folgender Güteindex soll dabei im LP-Fall minimiert werden:

$$J(\underline{u}) = \sum_{i=1}^{n} f_i y_i + \sum_{i=n+1}^{2n} f_i u_{i-(n+1)}$$

$y_i$ : Innentemperatur zum Zeitpunkt i
$u_i$ : Vorlauftemperatur zum Zeitpunkt i

Da die Raumtemperatur bereits über die Beschränkungen eingestellt wird, müssen nur die zukünftigen Vorlauftemperaturen T_VRL_pred gewichtet werden, welche den letzten n Elementen des Optimierungszustandes entsprechen. Wegen der unterschiedlichen Längen der Zeitintervalle innerhalb des Zeithorizontes sind die Vorlauftemperaturen auch dementsprechend zu gewichten (Energiekosten bleiben gleich).

Beispiel: Am Ende des Zeithorizontes viermal grössere Zeitintervalle

$$\underline{f} = \left[ \underbrace{0000\cdots00}_{\substack{keine\,Gewichtung\\der\,Innentemperaturen}} \quad 111\cdots444 \right]^T$$

Die folgenden mit a) bis c) bezeichneten Gleichheitsbedingungen und Ungleichheitsbedingungen müssen dabei berücksichtigt werden:

a) n Gleichungen der zukünftigen Innentemperaturen durch Anwendung der modellbasierten Vorwärtsrechnung
n1 Gleichungen mit kleinen Zeitschritten:

$$y_1 = p_{11}\,y_0 + p_{21}\,y_{-1} + p_{31}\,u_0 + p_{41}\,u_{-1} + p_{51}\,w_0 + p_{61}\,w_{-1} + p_{71}$$

$$y_2 = p_{11}\,y_1 + p_{21}\,y_0 + p_{31}\,u_1 + p_{41}\,u_0 + p_{51}\,w_1 + p_{61}\,w_0 + p_{71}y_{n1}$$

$$= p_{11}\,y_{n1-1} + p_{21}\,y_{n1-2} + p_{31}\,u_{n1-1} + p_{41}\,u_{n1-2} + p_{51}\,w_{n1-1} + p_{61}\,w_{n1-2} + p_{71}$$

$$\vdots$$

$$y_{n1} = \ldots$$

1 Gleichung für den Übergangsschritt

$$y_{n1+1} = p_{1\bar{u}}\,y_{n1} + p_{2\bar{u}}\,y_{n1-1} + p_{3\bar{u}}\,u_{n1} + p_{4\bar{u}}\,u_{n1-1} + p_{5\bar{u}}\,w_{n1} + p_{6\bar{u}}\,w_{n1-1} + p_{7\bar{u}}$$

n-n1-1 Gleichnungen mit grossen Zeitschritten

$$y_{n1+2} = p_{12}\,y_{n1+1} + p_{22}\,y_{n1} + p_{32}\,u_{n1+1} + p_{42}\,u_{n1} + p_{52}\,w_{n1+1} + p_{62}\,w_{n1} + p_{72}$$

$$\vdots$$

$$y_n = p_{12}\,y_{n-1} + p_{22}\,y_{n-2} + p_{32}\,u_{n-1} + p_{42}\,u_{n-2} + p_{52}\,w_{n-1} + p_{62}\,w_{n-2} + p_{72}$$

b) 2n Ungleichungen für Vorlauftemperaturbeschränkungen

$$u_{-1} - dT\_VRL_{down} < u_0 < u_{-1} + dT\_VRL_{up}$$

$$u_0 - dT\_VRL_{down} < u_1 < u_0 + dT\_VRL_{up}$$

$$u_1 - dT\_VRL_{down} < u_2 < u_1 + dT\_VRL_{up}$$

$$\vdots$$

$$u_{n-2} - dT\_VRL_{down} < u_{n-1} < u_{n-2} + dT\_VRL_{up}$$

Obige Ungleichungen ergeben n Ungleichungen für Vorlauftemperaturzuwachsbeschränkung und n Ungleichungen zur Vorlauftemperaturabnahmebeschränkung - also entsprechende Ungleichungen für jeden Zeitpunkt der Vorausrechnung -. Die Zuwachsbeschränkung ist dT_VRL$_{up}$ und die Abnahmebeschränkung ist dT_VRL$_{down}$.

c) 3n Beschränkungen des Optimierungszustandes

Beschränkung der Innentemperatur während der Belegung:

$$y_k > T_{comfort}$$

Beschränkung der Innentemperatur während der Nichtbelegung:

$$y_k > T_{min}$$

Obige Beschränkungen ergeben n Ungleichungen.

Beschränkung der Vorlauftemperatur:

$$y_0 < u_0 < T\_VRL_{max}$$
$$y_1 < u_1 < T\_VRL_{max}$$
$$:$$
$$y_{n-1} < u_{n-1} < T\_VRL_{max}$$

Obige Beschränkungen ergeben 2n Ungleichungen.

*Lösung mit quadratischer Programmierung (QP-Fall)*

Für den skalaren Fall ergibt sich das folgende zu minimierende Gütekriterium während Raumbelegung:

$$\frac{1}{2}\left(T_{int} - T_{comfort}\right)q(T_{int} - T_{comfort})) + \frac{1}{2}T_{VRL}r_2 T_{VRL} + r_1 T_{VRL} \qquad .$$

Die Bestrafungsfaktoren q, r1 und r2 sind Teil der Komfortsteuerung und sind so zu wählen, dass der gewünschte Kompromiss zwischen Heizenergieverbrauch und Komfort eingehalten wird.

*Lösungsalgorithmus*

Die Optimierung kann mit Hilfe der Active-Set-Methode, welche auch unter dem Namen Projection-Methode bekannt ist (siehe Gill [7], [8], Luenberger [9] S. 247ff, Übersicht siehe [6]) oder mit einem Simplex-Algorithmus (siehe Press [10]) gelöst werden.

Hier wird der Algorithmus für den Linear-Programming-Fall in groben Zügen beschrieben. Dieser lässt sich wie folgendermassen darstellen:

Optimierungsproblem:

$$\underset{x \in \Re^n}{\text{minimiere}}\, q(\underline{x}) = \underline{f}^T \underline{x}$$

$$A_i \underline{x} = \underline{b}_i \quad i = 1,...,n_{eqcstr}$$

$$A_i \underline{x} \leq \underline{b}_i \quad i = n_{eqcstr} + 1,...,n_{vars}$$

$$\underline{vlb} \leq \underline{x} \leq \underline{vub}$$

Der für die Optimierung verwendbare Algorithmus, wird vorteilhafterweise in folgende Hauptschritte eingeteilt:

PHASE I: Finden eines Punktes, der die Bedingungen erfüllt

1. $\underline{f}$, $\underline{b}$ und Zeilen von A normalisieren
2. Bounds $\underline{vlb}$ und $\underline{vub}$ wie Gleichungen und Ungleichungen schreiben (erweitern von A)
3. Behandeln der Gleichungen (Funktion eqnsolv):

-   Suche nach linearer Abhängigkeit unter den $_{eqestr}$ Gleichungen, entsprechende Gleichungen löschen.
-   Lösen des (in unserem Fall unbestimmten) *Gleichungssystems* $\Rightarrow \underline{x}$
-   QR-Zerlegung der Aktivset-Matrix $A_A^T \Rightarrow$ Nullraum $Z = Q(:,n_{eqstr}+1,n_{vars})$

4. Finden eines Startpunktes der Iteration:

Falls die Bedingungen für $\underline{x}$ nicht erfüllt werden, wird eine Startprozedur (siehe auch [6], Seiten 2-30) durchgeführt, die eine künstliche Varable $\gamma$ minimiert.

5. Falls die Suche erfolgreich war, wird die Suchrichtung $\underline{SD} = -Z\,Z^T\,\underline{f}$ *bestimmt* (Steepest Descent). Diese hat die Richtung des auf den Nullraum projezierten negativen Gradienten der zu minimierenden Funktion q (im LP-Fall -$\underline{f}$).

PHASE II: Hauptroutine, Auffinden des optimalen Punktes

1. Finde die Distanz d in Suchrichtung SD, die möglich ist, bis die erste Bedingung verletzt wird. Falls zwei Bedingungen in gleicher Distanz blockieren, so nehme man diejenige Bedingung ins Aktivset auf, die den kleineren Index besitzt (Bland's rule for anti-cycling; siehe [6]).
2. Falls keine Bedingung in Suchrichtung existiert $\Rightarrow$ Lösung ist unbegrenzt.
3. Aufdatieren von $\underline{x}$: $\underline{x} = \underline{x} + \underline{dSD}$ und Aufdatierung des Aktivsets $A_A$.
4. Berechne Lagrange-Multiplikatoren $\underline{\lambda}$. Falls alle $\underline{\lambda} \geq 0$, so ist die optimale Lösung gefunden und der Algorithmus terminiert hier, sonst falls d > 0 entferne diejenige Bedingung aus dem Aktivset, welche den negativsten Langrange-Multiplikator besitzt, falls d = 0, so wende Bland's rule for anti-cycling an und lösche diejenige Bedingung mit dem kleinsten Index.
5. Fahre fort bei Punkt 1.

Wettervorhersage

Die Wettervorhersage ist derjenige Teil des Gesamtreglers, der sich am besten einzeln behandeln lässt. Es zeigt sich, dass beispielsweise für die Aussentemperaturvorhersage, falls nur ein Aussentemperaturfühler vorhanden ist, eine Methode genügt, welche auf dem aktuellen Messwert und dem Messwert beruht, der um 24 Stunden vor dem zu schätzenden Zeitpunkt liegt.

<u>Vorbereitung des Regelverfahrens</u>

Bereitstellen der Einstellparameter und Anfangsbedingungen für das Raummodell und den Regler, der Benutzer- und der Wetterdaten.

<u>Ausführung des Regelverfahrens</u>

1. Der Regler liest die aktuellen *Wetterdaten,* die Innentemperatur, die Vorlauftemperatur und die diskrete Zeit ein.
2. Die *Wettervorhersage* wird ausgeführt. Es resultiert ein Vorhersageprofil der Länge des Zeithorizontes.
3. Ein Beobachter zur *Innentemperaturfilterung* kann eingesetzt werden.
4. Die *Raumbelegung* über den Zeithorizont wird vorausgerechnet.
5. Die *Parameter* des Raummodells des Reglers werden mit einem RLS-BGF Verfahren geschätzt.
6. Falls die Modellparameter geschätzt werden, müssen die zugehörigen Parameter für den langsameren Takt bestimmt werden.
7. Das optimale *Vorlauftemperaturprofil* über den Zeithorizont wird durch einen LP oder QP Algorithmus berechnet, wovon der erste Wert gestellt wird.
8. *Aufdatierung* der zwischengespeicherten Daten.
9. Schalten der Pumpe, Aufzeichnung der gewünschten Daten.

<u>Hinweise bezüglich der notwendigen Mittel zur Implementierung</u>

Es versteht sich von selbst, dass der prädiktive Regler 1 mit Vorteil wenigstens einen Prozessor oder Mikrocomputer sowie Speichermodule zur Speicherung von Programmen und Daten aufweist. Dadurch, dass der prädiktive Regler 1 wenigstens

- einen ersten Datenspeicher, in dem auf einem linearen Verbrauchermodell basierende Vorschriften zur Berechnung von Prozessgrössen abgespeichert sind,
- einen zweiten Datenspeicher, in dem Vorschriften für einzuhaltende Beschränkungen oder Grenzwerte für Prozessgrössen und von Prozessgrössen abgeleitete Grössen abgespeichert sind, und
- Mittel zur wiederholbaren Optimierung des Energieverbrauchs oder der Energiekosten mithilfe der linearen Programmierung aufweist und derart ausgestaltet ist, dass die Optimierung über einen gleitenden Zeithorizont durchführbar ist, sind die genannten Vorteile der Erfindung erreichbar.

In einer Variante der Erfindung weist der Regler 1 anstelle der Mittel zur wiederholbaren Optimierung des Energieverbrauchs oder der Energiekosten mithilfe der linearen Programmierung Mittel zur wiederholbaren Optimierung von Prozessgrössen und von Prozessgrössen abgeleiteten Grössen und des Energieverbrauchs oder der Energiekosten mithilfe der quadratischen Programmierung auf.

<u>Literaturverzeichnis zu den Hinweisen in der Beschreibung:</u>

[3] System Identification
Theory for the User
Lennart Ljung
Prentice-Hall 1987
ISBN 0-13-881640-9

[5] Abtastregelung
J. Ackermann
Springer Verlag 1972
ISBN 3-540-05707-2

[6] Optimization Toolbox
User's Guide
Mary Ann Branch, Andrew Grace

The Math Works 1996

[7] Procedures for Optimization Problemes with a Mixture of Bounds and General Linear Constraints
P.E. Gill, W. Murray, M.A. Saunders and M.H. Wright
ACM Trans. Math. Software, Vol. 10, pp. 282-298, 1984

[8] Numerical Linear Algebra and Optimization, Vol. 1
P.E. Gill, W. Murray, M.H. Wright
Addison Wesley 1991

[9] Introduction to linear and nonlinear programming
David G. Luenberger
Addison-Wesley 1973
ISBN 0-201-04347-5

[10] Numerical Recipes in C
The Art of Scientific Computing, Second Edition
W. H. Press, S. A. Teukolsky, W. T. Vetterling, B. P. Flannery
Cambridge University Press 1992
ISBN 0-521-43108-5

**Patentansprüche**

1. Prädiktive Einrichtung(1) zum Regeln oder Steuern von Versorgungsgrössen,
   wobei die Einrichtung aufweist:

   - einen ersten Datenspeicher, in dem auf einem linearen Verbrauchermodell basierende Vorschriften zur Berechnung von Prozessgrössen abgespeichert sind,
   - einen zweiten Datenspeicher, in dem Vorschriften für einzuhaltende Beschränkungen oder Grenzwerte für Prozessgrössen und von Prozessgrössen abgeleiteten Grössen abgespeichert sind, und
   - Mittel zur wiederholbaren Optimierung des Energieverbrauchs oder der Energiekosten,

   wobei die Einrichtung derart ausgestaltet ist, dass die Optimierung unter Berücksichtigung der in den beiden Datenspeichern abgcspcichcrtcn Vorschriften über einen gleitenden Zeithorizont durchgeführt wird,
   **dadurch gekennzeichnet,**
   **dass** die Optimierung des Energieverbrauchs oder der Energiekosten durch lineare Programmierung durchgeführt wird, und
   **dass** der Zeithorizont der Optimierung in wenigstens zwei Zeitbereiche aufgeteilt ist,
   wobei in einem ersten Zeitbereich aufeinanderfolgende diskrete Zeitpunkte näher beieinander liegen als im zweiten Zeitbereich.

2. Einrichtung nach einem vorangehenden Anspruch, **dadurch gekennzeichnet, dass** das Verbrauchermodell ein Raummodell ist und dass die Vorschriften zur Berechnung der im Raummodell auftretenden Prozessgrössen Raum- oder Wandtemperaturen durch ein Gleichungssystem verwirklicht sind, wobei einem diskreten Zeitpunkt des Zeithorizonts wenigstens eine Gleichung zugeordnet ist.

3. Einrichtung nach einem vorangehenden Anspruch, **dadurch gekennzeichnet, dass** Beschränkungen für die Prozessgrössen Energieträgertemperatur oder der zur Verfügung zu stellenden Leistung durch ein Ungleichungssystem verwirklicht sind, wobei einem diskreten Zeitpunkt des Zeithorizonts mehrere Ungleichung zugeordnet sind.

4. Einrichtung nach einem vorangehenden Anspruch, **dadurch gekennzeichnet, dass** Beschränkungen für die Änderungen der Prozessgrösse Vorlauftemperatur durch ein Ungleichungssystem verwirklicht sind, wobei einem diskreten Zeitpunkt des Zeithorizonts mehrere Ungleichung zugeordnet sind.

5. Einrichtung nach einem vorangehenden Anspruch, **dadurch gekennzeichnet, dass** Beschränkungen für den Komfort beschreibende Prozessgrössen durch ein Ungleichungssystem verwirklicht sind, wobei einem diskreten Zeitpunkt des Zcithorizonts wenigstens eine Ungleichung zugeordnet ist.

6. Einrichtung nach Anspruch 5, **dadurch gekennzeichnet, dass** Grenzwerte der Beschränkungen von einer erwarteten Raumbelegung abhängig sind.

7. Einrichtung nach einem vorangehenden Anspruch, **dadurch gekennzeichnet, dass** der Abstand der aufeinander folgenden diskreten Zeitpunkte des zweiten Zeitbereichs ein Vielfaches des Abstandes der aufeinander folgenden diskreten Zeitpunkte des ersten Zeitbereichs beträgt.

8. Einrichtung nach einem vorangehenden Anspruch, **dadurch gekennzeichnet, dass** die Einrichtung derart ausgestaltet ist, dass Parameter des Verbrauchermodells selbstständig adaptiv verändert werden.

9. Einrichtung nach Anspruch 8, **dadurch gekennzeichnet, dass** die Einrichtung derart ausgestaltet ist, dass Parameter des Verbrauchermodells durch ein rekursives Least-Squares-Verfahren mit sogenanntem Bounded-Gain-Forgetting geschätzt werden.

10. Einrichtung nach einem vorangehenden Anspruch, **dadurch gekennzeichnet, dass** die Einrichtung derart ausgestaltet ist, dass Versorgungsgrössen oder andere Prozessgrössen gemessen werden und die Messwerte zur Optimierung verwendet werden.

11. Einrichtung nach Anspruch 10, **gekennzeichnet durch** ein Filter, **durch** welches eine gemessene Versorgungsgrösse oder eine andere gemessene Prozessgrösse vor deren Rückführung an einen Dateneingang der Einrichtung transformiert werden.

12. Einrichtung nach Anspruch 11, **dadurch gekennzeichnet, dass** das Filter ein Zustandsestimator - beispielsweise ein Kalmanfilter -- ist.

13. Einrichtung nach einem vorangehenden Anspruch, **dadurch gekennzeichnet, dass** die Einrichtung derart ausgestaltet ist, dass geschätzte zeitliche Verläufe von auf den Prozess wirkenden Störgrösscn wie beispielsweise Aussentemperatur oder Sonneneinstrahlung über den Zeithorizont der Optimierung vorausberechnet werden und bei der Optimierung berücksichtigt werden.

14. Einrichtung nach Anspruch 13, **dadurch gekennzeichnet, dass** die Einrichtung derart ausgestaltet ist, dass der zeitliche Verlauf einer auf den Prozess wirkenden Störgrösse durch ein Wettermodell geschätzt werden.

15. Einrichtung nach Anspruch 14, **dadurch gekennzeichnet, dass** die Einrichtung derart ausgestaltet ist, dass Parameter des Wettermodells selbsttätig adaptiv verändert werden.

16. Einrichtung nach einem vorangehenden Anspruch, **dadurch gekennzeichnet, dass** die Einrichtung derart ausgestaltet ist, dass statische Nichtlincaritäten eines Leistungsabgabesystems durch eine nichtlineare Funktionseinheit abgeschwächt werden.

17. Einrichtung nach einem vorangehenden Anspruch, **gekennzeichnet durch**
einen in einem nach Norden ausgerichteten Referenzraum (20) angeordneten Raumtemperaturfühler,
wobei der Referenzraum (20) zu einem Gebäude mit einem IIeizkreis und mit wenigstens einem nach Süden und einem nach Norden orientierten Raum gehört, und,
wobei der Zusammenhang zwischen der im Referenzraum (20) benötigten Heizleistung und der benötigten Vorlauftemperatur **durch** eine Gleichung gegeben ist, welche die Heizleistung bei konstantern Massenstrom **durch** den Heizkreis des Referenzraums (20) proportional der Temperaturdifferenz zwischen der Vorlauftemperatur und der Referenzraumtemperatur berechnet.

18. Einrichtung nach einem vorangehenden Anspruch, **dadurch gekennzeichnet, dass** ein nicht als Referenzraum (20) benutzter Raum ein Thermostatventil (THV) aufweist.

## Claims

1. Predictive device (1) for regulating or controlling supply variables,
wherein the device features:

- a first data storage, in which rules for calculating process variables are stored, said rules being based on a linear consumption model,
- a second data storage, in which rules for restrictions that must be satisfied are stored or limit values for process variables and variables derived from process variables are stored, and
- means for the repeatable optimisation of the energy consumption or energy costs,

wherein the device is configured such that the optimisation is carried out over a sliding time horizon with reference to the rules which are stored in the two data storages,

**characterised in that**

the optimisation of the energy consumption or energy costs is carried out by means of linear programming, and that the time horizon of the optimisation is divided into at least two time segments, wherein consecutive discrete time points in a first time segment are situated closer to each other than in the second time segment.

2. Device according to a preceding claim, **characterised in that** the consumption model is a room model and that the rules for calculating the process variables room temperatures or wall temperatures occurring in the room model are realised by means of a system of equations, wherein at least one equation is assigned to a discrete time point of the time horizon.

3. Device according to a preceding claim, **characterised in that** restrictions for the process variables energy carrier temperature or power to be supplied are realised by means of a system of inequalities, wherein a plurality of inequalities are assigned to a discrete time point of the time horizon.

4. Device according to a preceding claim, **characterised in that** restrictions for the changes in the process variable feed temperature are realised by means of a system of inequalities,
wherein a plurality of inequalities are assigned to a discrete time point of the time horizon.

5. Device according to a preceding claim, **characterised in that** restrictions for process variables describing the comfort are realised by means of a system of inequalities, wherein at least one inequality is assigned to a discrete time point of the time horizon.

6. Device according to claim 5, **characterised in that** limit values of the restrictions are dependent on an expected room occupancy.

7. Device according to a preceding claim, **characterised in that** the interval between the consecutive discrete time points of the second time segment is a multiple of the interval between the consecutive discrete time points of the first time segment.

8. Device according to a preceding claim, **characterised in that** the device is configured such that parameters of the consumption model are independently adaptively changed.

9. Device according to claim 8, **characterised in that** the device is configured such that parameters of the consumption model are estimated by means of a recursive least squares method using so-called bounded gain forgetting.

10. Device according to a preceding claim, **characterised in that** the device is configured such that supply variables or other process variables are measured and the measured values are used for optimisation.

11. Device according to claim 10, **characterised by** a filter by means of which a measured supply variable or another measured process variable is transformed before being returned to a data input of the device.

12. Device according to claim 11, **characterised in that** the filter is a state estimator - e.g. a Kalman filter.

13. Device according to a preceding claim, **characterised in that** the device is configured such that estimated temporal profiles of interference variables which act on the process, e.g. external temperature or insolation, are pre-calculated over the time horizon of the optimisation and are taken into account during the optimisation.

14. Device according to claim 13, **characterised in that** the device is configured such that the temporal profile of an interference variable which acts on the process is estimated by a weather model.

**15.** Device according to claim 14, **characterised in that** the device is configured such that parameters of the weather model are automatically adaptively changeable.

**16.** Device according to a preceding claim, **characterised in that** the device is configured such that static non-linearities of a power output system are moderated by a non-linear functional unit.

**17.** Device according to a preceding claim, **characterised by**
a room temperature probe which is arranged in a reference room (20) that is orientated towards north,
wherein the reference room (20) belongs to a building having a heating circuit and at least one room that is orientated towards south and one room that is orientated towards north, and
wherein the relationship between the required heating power in the reference room (20) and the required feed temperature is given by means of an equation which calculates the heating power assuming a constant mass flow through the heating circuit of the reference room (20) in proportion to the temperature difference between the feed temperature and the reference room temperature.

**18.** Device according to a preceding claim, **characterised in that** a room which is not used as a reference room (20) has a thermostatic valve (THV).

**Revendications**

**1.** Dispositif prédictif (1) pour la régulation ou la commande de grandeurs d'alimentation, le dispositif comprenant:

- une première mémoire de données dans laquelle sont stockées des règles de calcul de grandeurs de processus basées sur un modèle linéaire de consommateur,
- une deuxième mémoire de données dans laquelle sont stockées des règles pour des limitations ou valeurs limites à respecter pour des grandeurs de processus et des grandeurs dérivées de grandeurs de processus et
- des moyens pour l'optimisation répétable de la consommation d'énergie ou du coût de l'énergie, le dispositif étant réalisé de manière telle que l'optimisation est effectuée sur un horizon de temps glissant compte tenu des règles stockées dans les deux mémoires de données,

**caractérisé en ce que**
l'optimisation de la consommation d'énergie ou du coût de l'énergie est effectuée par une programmation linéaire et l'horizon de temps de l'optimisation est répartie en au moins deux plages de temps, des instants discrets successifs étant plus proches l'un de l'autre dans une première plage de temps que dans la deuxième plage de temps.

**2.** Dispositif selon une revendication précédente, **caractérisé en ce que** le modèle de consommateur est un modèle de local et **en ce que** les règles de calcul des grandeurs de processus températures du local ou de la paroi se présentant dans le modèle de local sont réalisées par un système d'équations, au moins une équation étant affectée à un instant discret de l'horizon de temps.

**3.** Dispositif selon une revendication précédente, **caractérisé en ce que** des limitations pour les grandeurs de processus température de la source d'énergie ou de la puissance à mettre à disposition sont réalisées par un système d'inéquations, plusieurs inéquations étant affectées à un instant discret de l'horizon de temps.

**4.** Dispositif selon une revendication précédente, **caractérisé en ce que** des limitations pour les modifications de la grandeur de processus température aller sont réalisées par un système d'inéquations, plusieurs inéquations étant affectées à un instant discret de l'horizon de temps.

**5.** Dispositif selon une revendication précédente, **caractérisé en ce que** des limitations pour des grandeurs de processus décrivant le confort sont réalisées par un système d'inéquations, au moins une inéquation étant affectée à un instant discret de l'horizon de temps.

**6.** Dispositif selon la revendication 5, **caractérisé en ce que** des valeurs limites des limitations dépendent d'une occupation escomptée du local.

**7.** Dispositif selon une revendication précédente, **caractérisé en ce que** la distance entre les instants discrets successifs de la deuxième plage de temps est un multiple de la distance entre les instants discrets successifs de la première plage de temps.

8. Dispositif selon une revendication précédente, **caractérisé en ce qu'**il est réalisé de manière telle que des paramètres du modèle de consommateur se modifient autonomement de manière adaptative.

9. Dispositif selon la revendication 8, **caractérisé en ce qu'**il est réalisé de manière telle que des paramètres du modèle de consommateur sont estimés par un procédé récursif «Least Squares» avec ce qu'on appelle le «Bounded Gain Forgetting».

10. Dispositif selon une revendication précédente, **caractérisé en ce qu'**il est réalisé de manière telle que des grandeurs d'alimentation ou autres grandeurs de processus sont mesurées et les valeurs de mesure sont utilisées pour l'optimisation.

11. Dispositif selon la revendication 10, **caractérisé par** un filtre par lequel une grandeur d'alimentation mesurée ou une autre grandeur de processus mesurée subissent une transformation avant d'être ramenées à une entrée de données du dispositif.

12. Dispositif selon la revendication 11, **caractérisé en ce que** le filtre est un estimateur d'état, par exemple un filtre de Kalman.

13. Dispositif selon une revendication précédente, **caractérisé en ce qu'**il est réalisé de manière telle que des tracés temporels estimés de grandeurs perturbatrices qui agissent sur le processus telles que, par exemple, la température extérieure ou le rayonnement solaire sont calculés d'avance sur l'horizon de temps de l'optimisation et pris en compte lors de l'optimisation.

14. Dispositif selon la revendication 13, **caractérisé en ce qu'**il est réalisé de manière telle que le tracé temporel d'une grandeur perturbatrice agissant sur le processus est estimé par un modèle météorologique.

15. Dispositif selon la revendication 14, **caractérisé en ce qu'**il est réalisé de manière telle que des paramètres du modèle météorologique se modifient automatiquement de manière adaptative.

16. Dispositif selon une revendication précédente, **caractérisé en ce qu'**il est réalisé de manière telle que des non-linéarités statiques d'un système de délivrance de puissance sont affaiblies par une unité fonctionnelle non linéaire.

17. Dispositif selon une revendication précédente, **caractérisé par**
un capteur de température du local situé dans un local de référence (20) orienté vers le nord,
le local de référence (20) faisant partie d'un bâtiment avec un circuit de chauffage et avec au moins un local orienté vers le sud et un local orienté vers le nord et
le rapport entre la puissance de chauffage requise dans le local de référence (20) et la température aller requise est donné par une équation qui calcule la puissance de chauffage pour un débit massique constant à travers le circuit de chauffage du local de référence (20) proportionnellement à la différence de température entre la température aller et la température du local de référence.

18. Dispositif selon une revendication précédente, **caractérisé en ce qu'**un local non utilisé en tant que local de référence (20) comporte une soupape thermostatique (THV).

# Fig. 1

EP 1 074 900 B1

Fig. 2

T_int_pred

T_VRL

T_VRL_pred

14 — Optimierung

T_ext_pred

occupancy_pred

T_int_obs

Parameter

10 — Wettervorhersage

11 — Raumbelegungs-vorhersage

12 — Beobachter

13 — Adaptivblock (RLS-BGF)

T_ext

Uhrzeit

T_int

# Fig. 3a

S     □ G<sub>h</sub>

N     T<sub>A</sub>

# Fig. 3b

S

| THV | THV | THV |
|-----|-----|-----|
| THV | **20** | THV |

N     T<sub>A</sub>

# Fig. 3c

S     □ G<sub>h</sub>

| **21** | **22** | **23** |
|--------|--------|--------|
| **24** | **25** | **26** |

N     T<sub>A</sub>

EP 1 074 900 B1

# Fig. 4

EP 1 074 900 B1

0 1 2 3 4 5 6 7 8 9 ........................ n1    n1+1   n1+2 .............................. n

Zeit [h]

Gegenwart

Ende des
Zeithorizontes

**Belegungssequenz:** 1 1 1 1 1 0 0 0 0 0 0 0 0 0 0 0 0 0 0 0 0 0 0 0 0      0      0      0      (1)      1

Belegungsende

Belegungsbeginn

**Verhindern von zu spätem
Einschalten infolge Diskretisierungseffekt.**

# Fig. 5

Zeithorizont

T_ext_pred

Zeit

occupancy-
pred

1

0

Zeit

Zeithorizont

$T_{comfort}$

$T_{min}$

Zeit

1

Zeit

EP 1 074 900 B1

Fig. 6

# Fig. 7

0 1 2 3 4 5 6 7 8 9 ......................... n1    n1+1    n1+2 ............................. n    Zeit [h]

Gegenwart

Ende des
Zeithorizonts

kleine Schritte    grosse Schritte

Übergangsschritt

EP 1 074 900 B1

# Fig. 8

$$G_{T_{VRL}}(z) = \frac{p_3 z + p_4}{z^2 - p_1 z - p_2}$$

$T_{VRL} \longrightarrow$

$$G_{T_A}(z) = \frac{p_5 z + p_6}{z^2 - p_1 z - p_2}$$

$T_A \longrightarrow$

$$G_{Q_F}(z) = \frac{p_7}{z^2 - p_1 z - p_2}$$

$Q_F \xrightarrow{\quad 1 \quad}$

$+ \;\; + \quad \bigcirc \quad \longrightarrow T_{INT}$

$+$

EP 1 074 900 B1

Fig. 9